# EUROPEAN PATENT SPECIFICATION

(11) **EP 2 571 654 B1**
(45) Date of publication and mention of the grant of the patent: **15.01.2014**
(21) Application number: 11721662.2
(22) Date of filing: 16.05.2011
(51) Int. Cl.: B23K 26/08, B23K 26/18, B23K 26/42

(54) **TRANSPORT DEVICE WITH ENDLESS CONVEYOR BELT AND METHOD FOR CUTTING PROVIDING SAID TRANSPORT DEVICE**
TRANSPORTVORRICHTUNG MIT ENDLOSEM FÖRDERBAND UND DIESE TRANSPORTVORRICHTUNG EINSETZENDES SCHNEIDVERFAHREN
DISPOSITIF DE TRANSPORT AVEC BANDE DE CONVOYAGE SANS FIN ET MÉTHODE DE COUPAGE METTANT EN OEUVRE CE DISPOSITIF DE TRANSPORT

(30) Priority: 12.11.2010 NL 2005686; 17.05.2010 NL 2004727
(43) Date of publication of application: 27.03.2013
(60) Divisional application: 13179615.3
(73) Proprietor: De Bruijne Delden Holding B.V., 7491 CB Delden (NL)
(72) Inventor: DE BRUIJNE, Jan, Frederik, Marco, NL-7491 CB Delden (NL); BEGEMANN, Edwin, NL-7671 EV Vriezenveen (NL)
(74) Representative: Schumann, Bernard Herman Johan
(86) International application number: PCT/NL2011/050330
(87) International publication number: WO 2011/145931

(56) References cited:
- US-A- 3 761 675
- US-A- 4 115 683
- US-A- 4 875 461

## Description

The invention relates to a conveyor with an endless conveyor belt, comprising conveyor belt elements or links connected pivotally to each other. The links define a substantially plane and flat active upper part for carrying elements, to be described hereinafter, which are to be transported and cut by an infrared laser during transport.

The conveyor belt can be driven during operation by generally usual and known drive means.

The transport apparatus according to the invention is used particularly to transport thin flexible materials such as textile, non-woven, sandpaper, cardboard and/or plastic film material, from which objects are cut out by laser cutting during transport.

For efficient cutting of thin materials with an IR laser these materials must lie flat and be properly fixed relative to the active upper part of the conveyor belt. There is however often the danger of material rumpling and/or shifting.

The surface on which cutting takes place is of great importance, because the laser beam impinges upon the surface when it cuts through the material. Many surfaces reflect laser beams, melt or are otherwise damaged or damage the material lying thereon.

A further problem is that smoke is often generated during cutting with a laser, and this has an adverse effect on the cutting quality of the laser beam. This smoke is therefore extracted. There is a danger here of cut material also being suctioned away.

United States patent with number US 3761675 B discloses a cloth cutting system wherein cloth is carried in a single layer into a cutting area wherein a laser beam is focused on the cloth and is directed by computer commands to travel within the cutting area so as to cut a plurality of patterns through the cloth rapidly and accurately.

The invention relates to a transport apparatus comprising an endless conveyor belt which is drivable by drive means, of which conveyor belt at least the outer side is embodied in a material which can withstand irradiation by the infrared laser radiation used to cut flat, thin materials such as textile, non-woven, sandpaper, cardboard or plastic film material present on the active upper part of the conveyor belt and carried along by this part. US 3761675 B discloses such a transport apparatus.

The outer surface of the links with top layer is perforated. Segments of the belt are enclosed airtightly both on the sides and on the underside. The links are provided with underpressure using suction means such as a fan. The material for transporting is hereby suctioned fixedly to the active upper part of the conveyor belt.

Owing to the profile structure it is possible that there remains sufficient underpressure to fix and transport the material, even when the surface is only partially covered with material.

The inventor has found a plastic which is substantially insensitive to the described adverse effect of the laser radiation, i.e. Werkstoff "S"®. Werkstoff "S"® is produced on the basis of a virgin (ultra)high molecular weight high density polyethylene. This material is non-reflective, does not melt and deforms to negligible extent, even at high load of laser radiation.

The transport apparatus preferably has the special feature that the conveyor belt has perforations and underpressure means are added locally to the active upper part such that, due to suction via the perforations, the flat, thin materials are held pressed with some force against this upper part.

The transport with underpressure provides the following advantages:
- The position of the cut material parts is known and fixed.
- The material is held flat by the underpressure.
- The material is not loaded mechanically during transport.
- Pressing of the material by the underpressure onto the active upper part of the conveyor belt only takes place locally, i.e. in the zone of the processing station where the laser with cutting optics is located.
- The material is not suctioned up when use is made of smoke extraction, but remains in place.

According to an important aspect of the invention, the transport apparatus has the special feature that the material which can withstand irradiation by the infrared laser radiation is Werkstoff "S"®; i.e. a plastic on the basis of a virgin (ultra)high molecular weight high density polyethylene.

The invention further relates to a cutting device, comprising a transport apparatus as described above, which transport apparatus comprises an endless conveyor belt which is drivable by drive means, of which conveyor belt at least the outer side is embodied in a material which can withstand irradiation by the infrared laser radiation used to cut flat, thin materials such as textile, non-woven, sandpaper, cardboard, plastic film material present on the active upper part of the conveyor belt and carried along by this part, and comprising a laser for producing said infrared laser radiation, wherein the material which can withstand irradiation by the infrared laser radiation is Werkstoff "S"®, i.e. a plastic on the basis of a virgin (ultra)high molecular weight high density polyethylene.

In another embodiment of the cutting device according to the invention, the infrared laser radiation has a wavelength in the range of 8 - 12 µm, more specifically in the range of 9 - 11 µm, even more specifically in the range of 9.2 - 10.6 µm.

In another embodiment of the cutting device according to the invention, said cutting device comprises a pick-up device for picking up the cut flat, thin materials from the active upper part of the conveyor belt and for displacing said cut flat, thin materials to a second location. Said second location may for example be a container for storing said cut flat, thin materials.

Preferably, said pick-up device is controlled by said laser. This has the advantage that the cut flat, thin materials are easily located and picked up by the pick-up device, such that the use of a camera is redundant, while accuracy may be enhanced. For example, the coordinates of the centers of the cut flat, thin materials may be sent to said pick-up device.

In another embodiment of the cutting device according to the invention, said cutting device comprises at least two lasers, wherein a first laser is arranged in front of the conveyor belt as seen from the transport direction, and wherein a second laser is arranged above said conveyor belt.

Preferably, said first laser is arranged between said conveyor belt and a supply roll for supplying said flat, thin materials.

Preferably, a suction device is arranged between said conveyor belt and said supply roll opposite to said first laser.

The invention further relates to a method for cutting flat, thin materials such as textile, non-woven, sandpaper, cardboard, plastic film material, said method comprising the steps of:
a) providing a transport apparatus according to claim 1 or 2 or a cutting device according to any of claims 3 - 8, said apparatus or device comprising an endless conveyor belt which is drivable by drive means, of which conveyor belt at least an active upper part is embodied in a material which can withstand irradiation by infrared laser radiation used to cut flat, thin materials such as textile, non-woven, sandpaper, cardboard, plastic film material present on the active upper part of the conveyor belt and carried along by this part, wherein the material which can withstand irradiation by the infrared laser radiation is a plastic on the basis of a virgin (ultra)high molecular weight high density polyethylene;
b) arranging said material on said active upper part of said conveyor belt and carrying along said flat, thin material by this part; and
c) cutting said material by irradiating infrared laser radiation on said material.

Preferably, said method further comprises the steps of:
c) picking up a cut part of said material; and
d) displacing said cut part to a second location.

Said picking up step preferably comprises picking up said cut part based on coordinates that are provided by a laser for producing said infrared laser radiation. This has the advantage that the cut parts are picked up with high accuracy.

Preferably, said method further comprises the step of:
e) creating an underpressure relative to the active upper part, such that due to suction via perforations in the conveyor belt said material is held pressed with some force against this upper part. Due to this, the position of the material may constantly be known, such that cutting may take place with high accuracy. This allows for part to part cutting, such that the amount of waste material may be reduced. Further, due to the fact that the material is held pressed against the upper part, said material will remain flat, which further enhances operation. Another advantage is that, in case a suction device is used for extracting smoke that may be produced during cutting, said material will not be suctioned away, but will remain in place on said upper part of said conveyor belt. Further, any mechanic load that is exerted on said material during transport may be reduced.

Preferably, said cutting step b) comprises the steps of:
b1) first cutting at least one first part in said material that is determined to be a waste part that is to be removed from a second part that is determined to be the final cut part; and
b2) then cutting said second part in said material.

Preferably, said method further comprises the step of:
f) removing said at least one first part from said second part.

Removing may for example take place by means of a suction device
This way, said waste parts are effectively removed from said material, such that the chance that a part remains in said material is reduced to almost zero.

Preferably, a or said picking up step comprises picking up only said second part.

In the accompanying figures:
Figure 1 shows a schematic longitudinal section of a transport apparatus according to the invention;
Figure 2 is a longitudinal section on enlarged scale through two links, showing that each link comprises a plurality of suction chambers which connect to truncated cone-shaped perforations extending through the top layer consisting of Werkstoff "S"®;
Figure 3 is a schematic longitudinal section of a cutting device according to the invention; and
Figure 4 is a schematic top view of a cut flat, thin material.

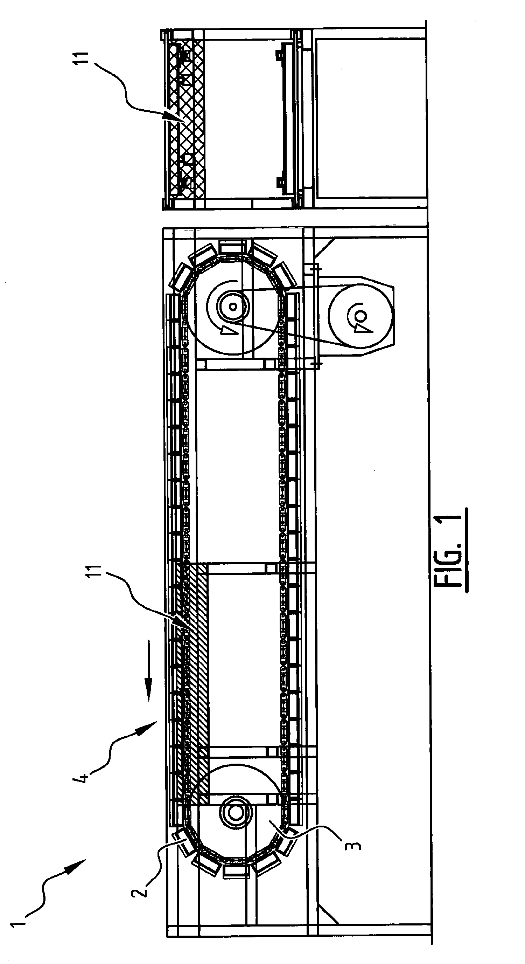

Figure 1 shows a transport apparatus 1 comprising an endless conveyor belt 2 which is drivable by drive means 3. The outer side 4 of the conveyor belt 2 is embodied in a material that is chosen in view of it's ability to withstand irradiation by the infrared laser radiation used to cut flat, thin materials such as textile, non-woven, sandpaper, cardboard, plastic film material present on the active upper part of the conveyor belt 2 and carried along by this part. The material of the top layer 4 can for instance be HMPE500 or HMPE1000.

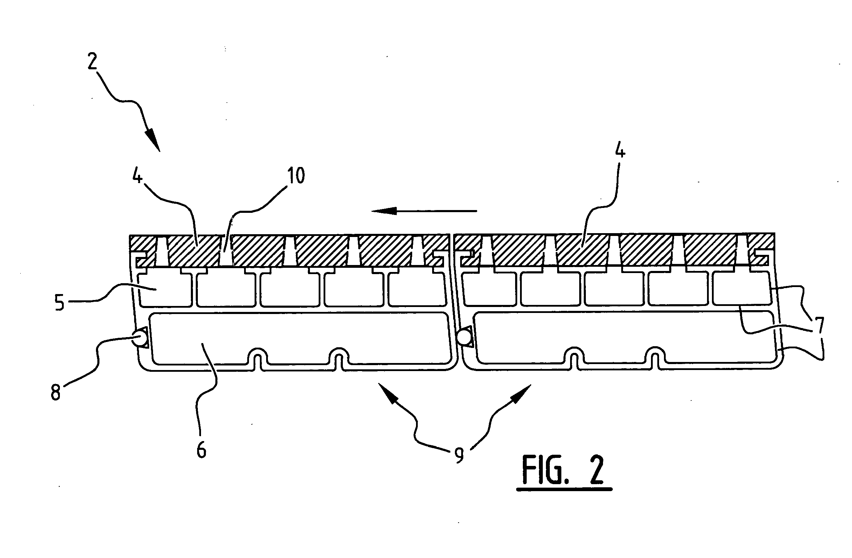

As described above, figure 2 shows that each link 9 comprises a plurality of suction chambers 5 which connect to truncated cone-shaped perforations 10 extending through the top layer 4 consisting of Werkstoff "S"®. The suction chambers 5 connect to a suction plenum chamber 6 situated on at least one side of the active upper part of the conveyor belt 2 and are coupled slidingly thereto in airtight manner. Due to suction via the perforations 10, a flat, thin material is held pressed with some force against the upper part 4 in the underpressure area 11 (not shown).

In order to prevent leakage of air the links are sealed against each other by sealing strips 7. A seal 8 is arranged between the links 9 of the conveyor belt 2.

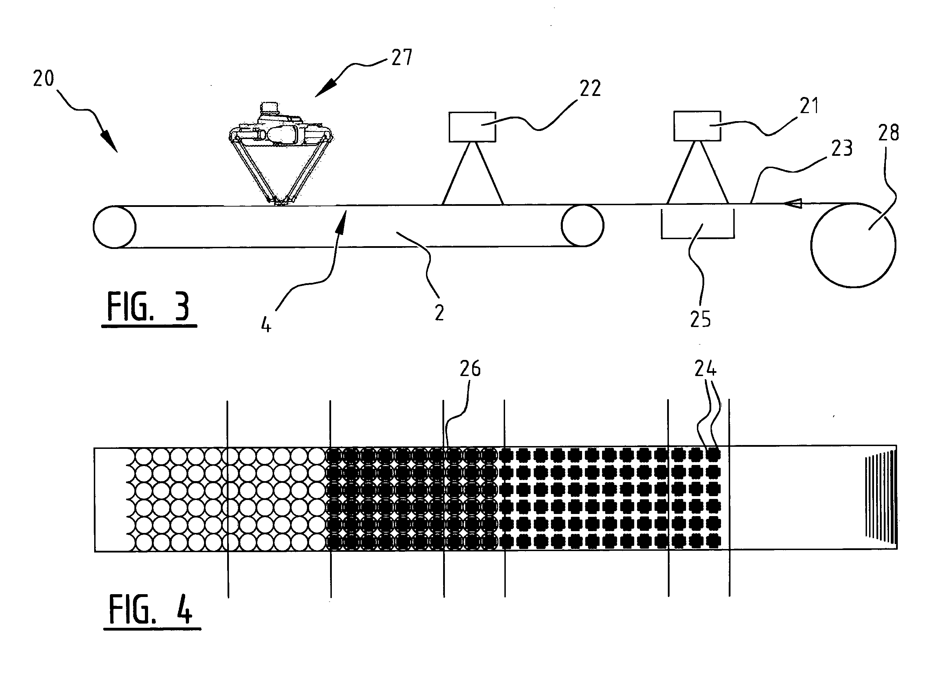

Figure 3 shows a cutting device 20, comprising the endless conveyor belt 2 of figures 1 and 2, and a first laser 21 and a second laser 22 for producing said infrared laser radiation. A flat, thin material 23 is guided between a supply roll 28 and the conveyor belt 2, such that the material 23 is held tensioned and flat in the air before it is arranged on the active upper part 4 of the conveyor belt 2 and carried on by this part 4. Said first laser 21 is arranged above said material 23 in said area where the material 23 is held tensioned in the air. The first laser 21 is therefore arranged upstream of the conveyor belt 2 as seen in the transport direction. Said first laser 21 cuts first parts 24 from said material 23, which first parts 24 are waste parts. A suction device 25 is arranged below said material 23 opposite to said first laser 21 for sucking the waste parts 24 from said material 23. This way, said waste parts 24 are effectively removed from said material 23, such that the chance that a part 24 remains in said material 23 is reduced to almost zero. As is shown in figure 4, said first parts 24 are round holes which are small compared to a final cut part 26.

As is further shown in figure 3, said material 23 is arranged on the upper active part 4 of the conveyer belt 2. As is described with reference to figure 2, said material 23 is held pressed with some force against the upper part 4 , such that the material 23 will not move during transport. Due to this, the position of the material 23 may constantly be known, such that cutting may take place with high accuracy. This allows for part to part cutting, such that the amount of waste material may be reduced. Further, due to the fact that the material 23 is held pressed against the upper part 4, said material 23 will remain flat, which further enhances operation. Another advantage is that, in case a suction device is used for extracting smoke that may be produced during cutting, said material 23 will not be suctioned away, but will remain in place on said upper part 4 of said conveyor belt 2. Further, any mechanic load that is exerted on said material 23 during transport may be reduced.

Said second laser 22 is arranged above said conveyor belt 2 and above said material 23 that is arranged on said conveyor belt 2. As is shown in figure 4, said second laser 22 cuts the outlines of second parts 26 in said flat, thin material 23, which are the final cut parts 26 comprising the holes 24. Said final cut parts 26 with holes 24 may for example be used as abrasive disks.

Preferably, the amount of laser radiation used to cut the second parts 26 is about 10% more than a minimum amount required for cutting. This ensures that the outlines of the parts 26 are fully cut. With conventional cutting devices it is not possible to use more radiation than minimally required, because the surplus of radiation is reflected by the conveyor belt 2 due to which the material 23 may be damaged. Due to fact that the conveyer belt 2 according to the invention has the advantage that the upper active part 4 is made of Werkstoff "S"®, it is possible to use a surplus of radiation, because this material does not reflect radiation. Further, said Werkstoff "S"® does not melt due to the radiation, and distorts only minimally.

The cutting device 20 further comprises a pick-up robot 27 for picking up the final parts 26 from the active upper part 4 of the conveyor belt 2 and for displacing said parts 26 to a second location. Said second location (not shown) may for example be a container for storing said final parts 26. Said pick-up robot 27 is controlled by said second laser 22, which second laser 22 sends the coordinates of the parts 26 to the robot 27, such that the robot may easily locate the parts 26. For example, the coordinates of the centers of the parts 26 may be sent to said robot 27. Due to the laser controlled pick-up robot 27 the use of a camera is redundant, while accuracy may be enhanced.

In a preferred embodiment of the cutting device 20 according to the invention, said first laser 21 and said second laser 22 are configured to cut the material 23 during the carrying on of the material 23, so called "continuous cutting". This has the advantage that the material does not have to be stopped for cutting as is the case with conventional cutting devices.

The invention is not limited to the embodiments shown. For example, said first laser can also be arranged above said conveyor belt, such that the first parts are also cut while the material is arranged on the conveyor belt. Further, instead of two lasers also one or more than two lasers may be used.

## Claims

1. Transport apparatus (1), comprising an endless conveyor belt (2) which is drivable by drive means (3), of which conveyor belt at least the outer side (4) is embodied in a material which can withstand irradiation by infrared laser radiation used to cut flat, thin materials (23) such as textile, non-woven, sandpaper, cardboard, plastic film material present on an active upper part of the conveyor belt and carried along by this part, **characterized in that** the material which can withstand irradiation by the infrared laser radiation is a plastic on the basis of a virgin (ultra)high molecular weight high density polyethylene.

2. Transport apparatus as claimed in claim 1, wherein the conveyor belt has perforations (10) and underpressure means (5, 6) are added locally to the active upper part such that, due to suction via the perforations, the flat, thin materials are held pressed with some force against this upper part.

3. Cutting device (20) comprising a transport apparatus (1) as claimed in any of the foregoing claims and comprising a laser (21, 22) for producing said infrared laser radiation.

4. Cutting device as claimed in claim 3, wherein the infrared laser radiation has a wavelength in the range of 8 - 12 µm, more specifically in the range of 9 - 11 µm, even more specifically in the range of 9.2 - 10.6 µm.

5. Cutting device as claimed in claim 3 or 4, comprising a pick-up device (27) for picking up the cut flat, thin materials from the active upper part of the conveyor belt and for displacing said cut flat, thin materials to a second location.

6. Cutting device as claimed in claim 5, wherein said pick-up device is controlled by said laser.

7. Cutting device as claimed in any of the foregoing claims 3 - 6, comprising at least two lasers, wherein a first laser (21) is arranged in front of the conveyor belt as seen from the transport direction, and wherein a second laser (22) is arranged above said conveyor belt.

8. Cutting device as claimed in claim 7, wherein said first laser is arranged between said conveyor belt and a supply roll for supplying said flat, thin materials.

9. Method for cutting flat, thin materials (23) such as textile, non-woven, sandpaper, cardboard, plastic film material, said method comprising the steps of:
a) providing a transport apparatus (1) according to claim 1 or 2 or a cutting device (20) according to any of claims 3 - 8;
b) arranging said material on said active upper part of said conveyor belt and carrying along said flat, thin material by this part; and
c) cutting said material by irradiating infrared laser radiation on said material.

10. Method as claimed in claim 9, further comprising the steps of:
c) picking up a cut part of said material; and
d) displacing said cut part to a second location.

11. Method as claimed in claim 10, wherein said picking up step comprises picking up said cut part based on coordinates that are provided by a laser for producing said infrared laser radiation.

12. Method as claimed in any of the foregoing claims 9 - 11, further comprising the step of:
e) creating an underpressure relative to the active upper part, such that due to suction via perforations in the conveyor belt said material is held pressed with some force against this upper part.

13. Method as claimed in any of the foregoing claims 9 - 12, wherein said cutting step b) comprises the steps of:
b1) first cutting at least one first part in said material that is determined to be a waste part that is to be removed from a second part that is determined to be the final cut part; and
b2) then cutting said second part in said material.

14. Method as claimed in claim 13, further comprising the step of:
f) removing said at least one first part from said second part.

15. Method as claimed in claim 14, wherein a or said picking up step comprises picking up only said second part.

## Patentansprüche

1. Transportvorrichtung (1), aufweisend ein Endlosförderband (2), das mittels Antriebsmitteln (3) antreibbar ist, von welchem Förderband mindestens die Außenseite (4) in einem Material verwirklicht ist, das einer Bestrahlung durch Infrarotlaserstrahlung standhalten kann, die verwendet wird, um flache, dünne Materialien (23), wie zum Beispiel Textil-, Textilverbund-, Sandpapier-, Karton-, Kunststofffolien-Material zu schneiden, das sich an einem aktiven oberen Teil des Förderbandes befindet und mittels dieses Teils mitgeführt wird, **dadurch gekennzeichnet, dass** das Material, welches der Bestrahlung durch die Infrarotlaserstrahlung standhalten kann, ein Kunststoff auf Basis eines neuen (ultra)hochmolekularen Polyethylens mit hoher Dichte ist.

2. Transportvorrichtung gemäß Anspruch 1, wobei das Förderband Perforierungen (10) aufweist und dem aktiven oberen Teil Unterdruckmittel (5, 6) lokal hinzugefügt sind, so dass die flachen, dünnen Materialien aufgrund eines Ansaugens über die Perforierungen mit einiger Kraft gegen diesen oberen Teil gedrückt gehalten werden.

3. Schneidvorrichtung (20), aufweisend eine Transportvorrichtung (1) gemäß irgendeinem der vorhergehenden Ansprüche und aufweisend einen Laser (21, 22) zum Erzeugen der Infrarotlaserstrahlung.

4. Schneidvorrichtung gemäß Anspruch 3, wobei die Infrarotlaserstrahlung eine Wellenlänge im Bereich von 8 µm bis 12 µm, insbesondere im Bereich von 9 µm bis 11 µm und noch mehr im Besonderen im Bereich von 9,2 µm bis 10,6 µ hat.

5. Schneidvorrichtung gemäß Anspruch 3 oder 4, aufweisend eine Aufnahmevorrichtung (27) zum Aufnehmen der geschnittenen flachen, dünnen Materialien von dem aktiven oberen Teil des Förderbandes und zum Verlagern der geschnittenen flachen, dünnen Materialien an einen zweiten Ort.

6. Schneidvorrichtung gemäß Anspruch 5, wobei die Aufnahmevorrichtung durch den Laser gesteuert ist.

7. Schneidvorrichtung gemäß irgendeinem der vorhergehenden Ansprüche 3 bis 6, aufweisend mindestens zwei Laser, wobei ein erster Laser (21) von der Transportrichtung aus betrachtet vor dem Förderband angeordnet ist, und wobei ein zweiter Laser (22) über dem Förderband angeordnet ist.

8. Schneidvorrichtung gemäß Anspruch 7, wobei der erste Laser zwischen dem Förderband und einer Versorgungsrolle zum Bereitstellen der flachen, dünnen Materialien angeordnet ist.

9. Verfahren zum Schneiden von flachen, dünnen Materialien (23), wie zum Beispiel Textil-, Textilverbund-, Sandpapier-, Karton-, Kunststofffolien-Material, wobei das Verfahren die folgenden Schritte aufweist:
a) Bereitstellen einer Transportvorrichtung (1) gemäß Anspruch 1 oder 2 oder einer Schneidvorrichtung (20) gemäß irgendeinem der Ansprüche 3 bis 8,
b) Anordnen des Materials an dem aktiven oberen Teil des Förderbandes und Mitführen des flachen, dünnen Materials mittels dieses Teils, und
c) Schneiden des Materials durch Bestrahlen des Materials mit Infrarotlaserstrahlung.

10. Verfahren gemäß Anspruch 9, ferner die folgenden Schritte aufweisend:
c) Aufnehmen eines geschnittenen Teils des Materials, und
d) Verlagern des geschnittenen Teils an einen zweiten Ort.

11. Verfahren gemäß Anspruch 10, wobei der Aufnahmeschritt das Aufnehmen des geschnittenen Teils basierend auf Koordinaten aufweist, die mittels eines Lasers zum Erzeugen der Infrarotlaserstrahlung bereitgestellt werden.

12. Verfahren gemäß irgendeinem der vorhergehenden Ansprüche 9 bis 11, ferner den folgenden Schritt aufweisend:
e) Erzeugen eines Unterdrucks bezüglich des aktiven oberen Teils, so dass das Material aufgrund eines Ansaugens über Perforierungen in dem Förderband mit einiger Kraft gegen diesen oberen Teil gedrückt gehalten wird.

13. Verfahren gemäß irgendeinem der vorhergehenden Ansprüche 9 bis 12, wobei der Schneideschritt b) die folgenden Schritte aufweist:
b1) zuerst Schneiden von mindestens einem ersten Teil in das Material, der als Ausschussteil bestimmt ist, der von einem zweiten Teil zu lösen ist, der als der endgültige Schnittteil bestimmt ist, und
b2) anschließend Schneiden des zweiten Teils in das Material.

14. Verfahren gemäß Anspruch 13, ferner den folgenden Schritt aufweisend:
f) Lösen des mindestens einen ersten Teils von dem zweiten Teil.

15. Verfahren gemäß Anspruch 14, wobei ein oder der Aufnahmeschritt das Aufnehmen nur des zweiten Teils aufweist.

## Revendications

1. Dispositif de transport (1), comprenant un tapis de convoyeur sans fin (2) qui peut être entraîné par un moyen d'entraînement (3), au moins la face externe (4) duquel tapis de convoyeur est mise en oeuvre en un matériau qui peut supporter l'exposition à un rayonnement laser à infrarouge utilisé afin de couper des matériaux minces plats (23) tels qu'un matériau textile, non tissé, du papier de verre, du carton, un film plastique présents sur une partie supérieure active du tapis de convoyeur et entraînés par cette partie, **caractérisé en ce que** le matériau qui peut supporter l'exposition au rayonnement laser à infrarouge est une matière plastique basée sur un polyéthylène à haute densité de poids moléculaire très élevé vierge.

2. Dispositif de transport selon la revendication 1, dans lequel le tapis de convoyeur présente des perforations (10) et des moyens de mise en dépression (5, 6) sont ajoutés localement sur la partie supérieure active de telle sorte que, du fait de l'aspiration à travers les perforations, les matériaux minces plats sont maintenus appliqués avec un certain effort contre cette partie supérieure.

3. Dispositif de coupe (20) comprenant un dispositif de transport (1) selon l'une quelconque des revendications précédentes et comprenant un laser (21, 22) afin de produire ledit rayonnement laser à infrarouge.

4. Dispositif de coupe selon la revendication 3, dans lequel le rayonnement laser à infrarouge présente une longueur d'onde dans la plage de 8 à 12 µm, de manière plus spécifique, dans la plage de 9 à 11 µm, et de manière encore plus spécifique dans la plage de 9,2 à 10,6 µm.

5. Dispositif de coupe selon la revendication 3 ou 4, comprenant un dispositif de ramassage (27) destiné à ramasser les matériaux minces plats coupés sur la partie supérieure active du tapis de convoyeur et à déplacer lesdits matériaux minces plats coupés vers un second emplacement.

6. Dispositif de coupe selon la revendication 5, dans lequel ledit dispositif de ramassage est commandé par ledit laser.

7. Dispositif de coupe selon l'une quelconque des revendications 3 à 6 précédentes, comprenant au moins deux lasers, dans lequel un premier laser (21) est agencé face au tapis de convoyeur comme on le voit depuis la direction de transport, et dans lequel un second laser (22) est agencé au-dessus dudit tapis de convoyeur.

8. Dispositif de coupe selon la revendication 7, dans lequel ledit premier laser est agencé entre ledit tapis de convoyeur et un rouleau d'alimentation destiné à délivrer lesdits matériaux minces plats.

9. Procédé de coupe de matériaux minces plats (23) tels qu'un matériau textile, non tissé, du papier de verre, du carton, un film plastique, ledit procédé comprenant les étapes de :
a) préparation d'un dispositif de transport (1) selon la revendication 1 ou 2 ou un dispositif de coupe (20) selon l'une quelconque des revendications 3 à 8 ;
b) agencement dudit matériau sur ladite partie supérieure active dudit tapis de convoyeur et transport dudit matériau mince plat par cette partie ; et
c) découpe dudit matériau par exposition dudit matériau à un rayonnement laser à infrarouge.

10. Procédé selon la revendication 9, comprenant, en outre, les étapes de :
c) ramassage d'une partie découpée dudit matériau ; et
d) déplacement de ladite partie découpée vers un second emplacement.

11. Procédé selon la revendication 10, dans lequel ladite étape de ramassage comprend le ramassage de ladite partie découpée sur la base de coordonnées qui sont délivrées par un laser afin de produire ledit rayonnement à infrarouge.

12. Procédé selon l'une quelconque des revendications 9 à 11 précédentes, comprenant en outre l'étape de :
e) création d'une dépression par rapport à la partie supérieure active, de telle sorte que, du fait de l'aspiration à travers des perforations sur le tapis de convoyeur ledit matériau est maintenu appliqué avec un certain effort contre cette partie supérieure.

13. Procédé selon l'une quelconque des revendications 9 à 12 précédentes, dans lequel ladite étape de découpe b) comprend les étapes de :
b1) découpe, dans un premier temps, d'au moins une première partie sur ledit matériau qui est définie comme étant une chute qui doit être retirée d'une seconde partie qui est définie comme la partie découpée finale ; et
b2) découpe, ensuite, de ladite seconde partie sur ledit matériau.

14. Procédé selon la revendication 13, comprenant en outre l'étape de : f) retrait de ladite au moins une première partie de ladite seconde partie.

15. Procédé selon la revendication 14, dans lequel une ou ladite étape de ramassage comprend le ramassage uniquement de ladite seconde partie.
